# FASCICULE DE BREVET EUROPEEN

(11) **EP 1 251 021 B1**
(45) Date de publication et mention de la délivrance du brevet: **16.08.2006**
(21) Numéro de dépôt: 02290896.6
(22) Date de dépôt: 10.04.2002
(51) Int. Cl.: B60J 1/20, B60R 5/04

(54) **Rideau à ressort enroulé**
Vorhang mit Spiralfeder
Curtain with coiled spring

(30) Priorité: 18.04.2001 FR 0105245
(43) Date de publication de la demande: 23.10.2002
(73) Titulaire: Centre d'Etude et de Recherche pour l'Automobile (CERA), 51100 Reims (FR)
(72) Inventeur: Montagne, Frédéric, 51480 Cumière (FR)
(74) Mandataire: Sayettat, Julien Christian

(56) Documents cités:
- EP-A- 0 911 219
- DE-A- 19 640 846
- US-A- 4 139 231
- US-A- 4 707 018
- US-A- 5 271 446
- US-A- 5 464 052

## Description

L'invention concerne un rideau enroulable.

L'invention trouve notamment son application dans des équipements pour véhicules automobile, par exemple dans des caches bagages ou des stores pare-soleil comportant un tel rideau.

On connaît des rideaux enroulables comportant un tube sur lequel une bande peut être enroulée ou déroulée en fonction des besoins de l'utilisateur.

De tels rideaux comprennent classiquement des mécanismes de rappel de la bande enroulée qui sont agencés pour permettre d'une part la mise sous tension de la bande lors de son déroulement et d'autre part un retour automatique de ladite bande dans son état enroulé.

On connaît des mécanismes de rappel formés d'au moins un ressort de traction qui est sollicité en torsion lors du déroulement de la bande.

Ce type de mécanisme présente de nombreux inconvénients parmi lesquels on peut citer :
- un bruit de fonctionnement important du fait du grincement des spires du ressort lors de l'enroulement et du déroulement de la bande ;
- des vibrations du ressort en condition de roulage qui rendent nécessaire l'utilisation de gaines anti-bruit pour loger le mécanisme ;
- un effort de déroulement irrégulier du fait de la sollicitation en torsion du ressort ;
- dans le cas où deux ressorts sont prévus, ceux-ci doivent être de pas inversés ;
- une mauvaise endurance du mécanisme ;
- un nombre de tours de précontraintes important ce qui limite le nombre de tours utilisables.

En outre, les mécanismes de rappel sont classiquement disposés dans un boîtier prévu à l'extérieur du tube ce qui laisse subsister un espace entre le rideau et les appuis latéraux sur lesquels le rideau est monté.

Cet espace diminue d'autant la largeur de rideau et est inesthétique. En outre, dans le cas d'un cache bagage, il est gênant que les bagages puissent être vus au travers de l'espace et, dans le cas d'un pare-soleil, l'ombre obtenue est moins étendue.

De tels mécanismes sont par exemple connus, en relation avec des moyens de rappel comprenant un ressort formé d'une lame enroulée, des documents EP-0 911 219, US-5 464 052 et US-4 139 231.

L'invention vise donc à remédier à ces inconvénients en proposant notamment un rideau enroulable qui, tout en étant simple de fabrication, permet le déroulement et l'enroulement d'une bande de façon optimale, et ce sur toute la largeur de la surface à couvrir.

A cet effet, et selon un premier aspect, l'invention concerne un rideau enroulable du type comprenant un tube enrouleur monté en rotation autour d'un axe central fixe, une bande enroulable autour dudit tube et des moyens de rappel de la bande à l'état enroulé, dans lequel les moyens de rappel comprennent au moins un ressort formé d'une lame enroulée, ledit ressort étant disposé à l'intérieur du tube avec les extrémités extérieure et intérieure de la lame respectivement associées au tube et à l'axe.

Selon un deuxième aspect, l'invention concerne un cache bagage comportant un tel rideau enroulable.

Selon un troisième aspect, l'invention concerne un store pare-soleil comportant un tel rideau enroulable.

D'autres objets et avantages de l'invention apparaîtront au cours de la description qui suit en référence aux dessins annexés dans lesquels :
- la figure 1 représente, en perspective éclatée et de façon schématique, un premier mode de réalisation d'un rideau enroulable ;
- la figure 2 représente, en coupe et de façon schématique, une extrémité du rideau représenté sur la figure 1, les éléments constitutifs du rideau étant assemblés ;
- la figure 3 représente une vue schématique de coté de l'extrémité de la figure 2 ;
- les figures 4a et 4b représentent, en coupe et de façon schématique, le ressort en position respectivement au repos et en contrainte ;
- la figure 5 représente, en coupe et de façon schématique, une extrémité d'un rideau selon un deuxième mode de réalisation.

En relation avec les figures, on décrit un rideau enroulable 1 comprenant un tube enrouleur 2 monté en rotation autour d'un axe central fixe 3, une bande enroulable 4 autour dudit tube 2 et des moyens de rappel 5 de la bande 4 à l'état enroulé.

Ce type de rideau 1 trouve notamment son application dans des équipements pour véhicules automobile, par exemple dans des caches bagages ou des stores pare-soleil comportant un tel rideau 1.

A cet effet, les deux extrémités 3a, 3b de l'axe fixe 3 sont destinées à être associées, éventuellement en étant pourvues de moyens adéquats, respectivement à un appui latéral qui est par exemple formé dans la garniture intérieure du véhicule.

Une fois déroulée, la bande 4 permet ainsi de couvrir une surface et, un fois enroulé, le rideau 1 présente un encombrement minimal.

La bande 4 comprend classiquement des moyens de préhension, par exemple formés d'une poignée, pour que l'utilisateur puisse actionner réversiblement la bande 4 depuis son état enroulé vers son état déroulé.

En outre, ces moyens de préhension peuvent former moyens d'accrochage de la bande 4 déroulée à un point fixe, par exemple formé d'un crochet prévu dans la garniture intérieure du véhicule.

Pour permettre d'une part la mise sous tension de la bande 4 lors de son déroulement et d'autre part un retour automatique de ladite bande 4 à son état enroulé, le rideau 1 est pourvu de moyens de rappel 5.

Selon l'invention, les moyens de rappel 5 comprennent au moins un ressort 6 formé d'une lame enroulée 7, ledit ressort 6 étant agencé pour être disposé à l'intérieur du tube 2.

Dans le mode de réalisation représenté sur les figures, les moyens de rappel 5 comprennent deux ressorts 6 disposés au voisinage des deux extrémités 2a, 2b du tube 2. Dans un autre mode de réalisation non représenté, un ressort 6 peut être prévu au voisinage du centre du tube 2.

Le rideau 1 selon l'invention permet, en intégrant les moyens de rappel 5 à l'intérieur du tube 2, de ne pas limiter la largeur de la surface à couvrir puisque la largeur de la bande 4 peut alors être prévue pour être sensiblement égale à la longueur du tube 2. En d'autres termes, la largeur de la bande 4 est optimisée pour un encombrement du rideau 1 donné.

En particulier, dans un cache bagage où le rideau 4 est disposé entre les deux parois latérales du coffre, cette réalisation permet de couvrir complètement la surface transversale supérieure du coffre.

Dans le mode de réalisation représenté sur les figures, le rideau 1 comprend, intégré à l'intérieur du tube 2 et au voisinage respectivement de ses extrémités 2a, 2b, deux paliers 8 agencés pour assurer une bonne rotation du tube 2 autour de l'axe fixe 3.

On décrit ci-dessous, en relation avec les figures, la réalisation d'un ressort 6 formé d'une lame 7 enroulée en spirale. Selon une autre réalisation non représentée, le ressort 6 peut être formé d'une lame 7 enroulée en hélice. Dans ces deux cas, le ressort 6 est sollicité en traction et la force de rappel est obtenue par flexion de la lame 7.

Ces deux types de ressort 6, par exemple réalisé en matériau métallique, sont connus par ailleurs et leurs caractéristiques physiques sont adaptées en fonction des contraintes spécifiques de chaque utilisation.

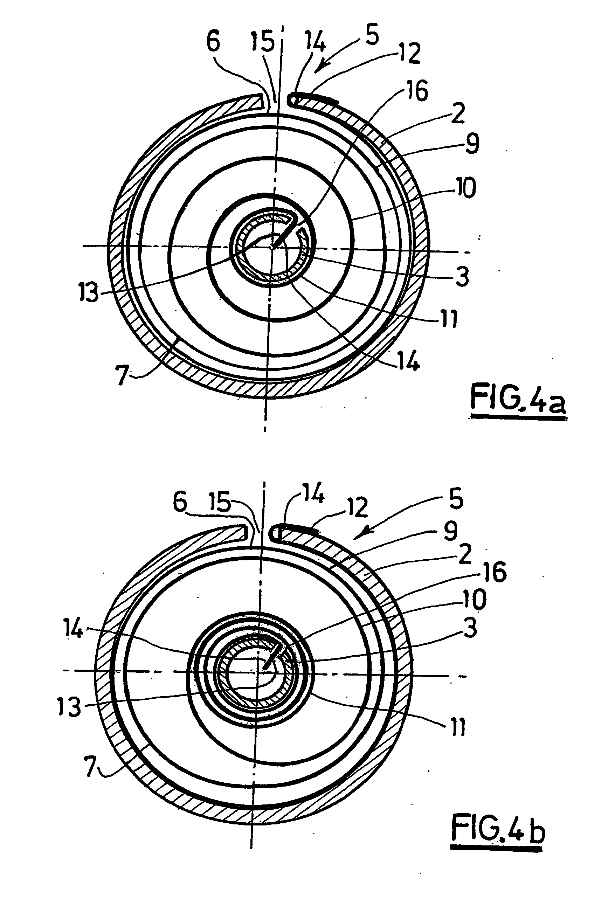

Dans un exemple particulier (voir figures 4a et 4b) l'enroulement de la lame 7 du ressort 6 est réalisé de façon irrégulière. Par exemple sur la figure 4a, le nombre de spires extérieures 9 est plus important que celui de spires intermédiaires 10 et intérieures 11.

Cette réalisation permet, dans le cadre de l'utilisation considérée, d'obtenir de bons résultats en permettant, lorsque le ressort 6 est contraint, l'enroulement des spires extérieures 9 autour de l'axe fixe 3 (voir figure 4b). Ainsi, l'effort à exercer pour dérouler la bande 4 est adapté pour un actionnement manuel et le fonctionnement du ressort 6 est rendu plus silencieux.

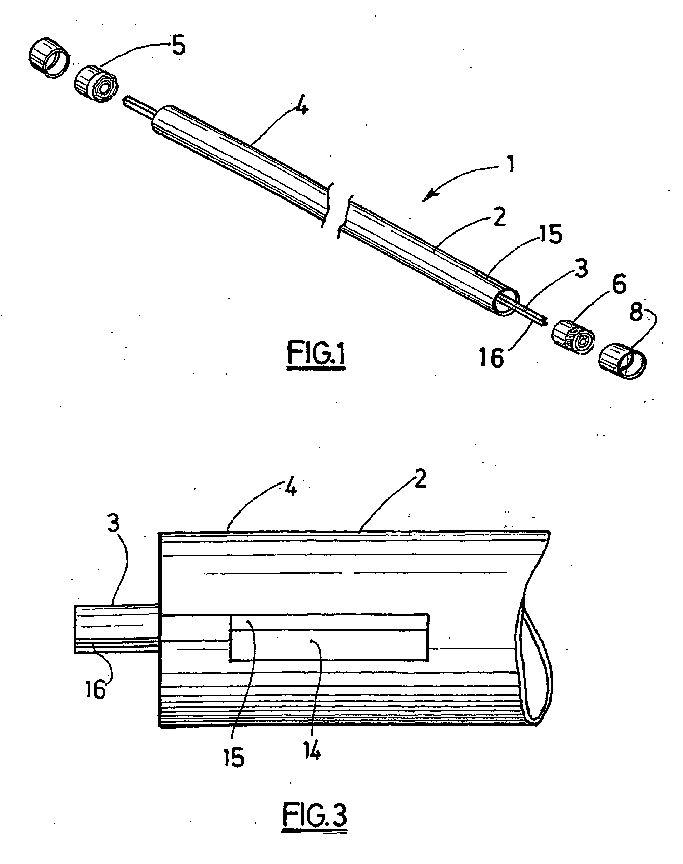

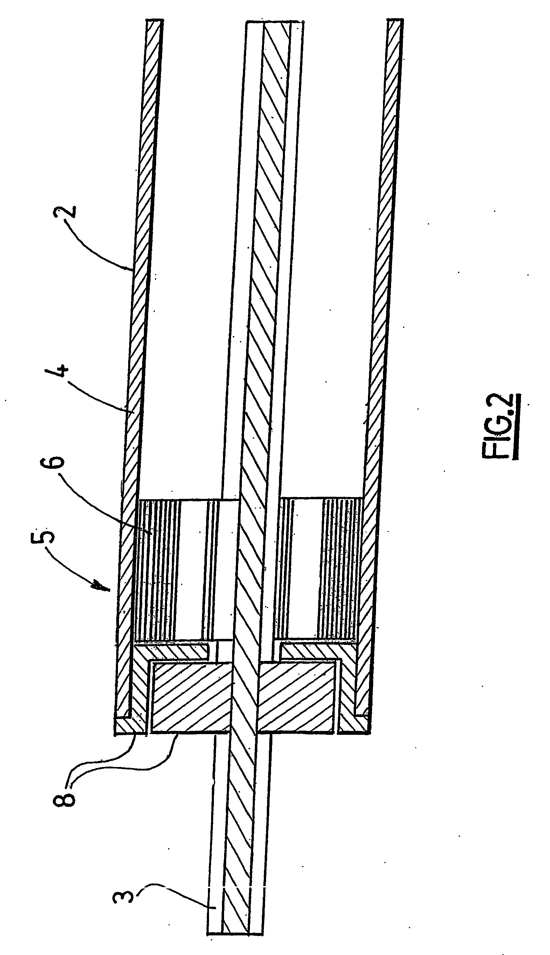

Selon le mode de réalisation représenté sur les figures 1 à 3, l'extrémité extérieure 12 de la lame 7 est associée directement au tube 2 et l'extrémité intérieure 13 de la lame 7 est associée à l'axe 3.

L'association du ressort 6 respectivement au tube 2 et à l'axe 3 est réalisée par une déformation des extrémités respectivement extérieure 12 et intérieure 13 de la lame 7, lesdites déformations étant destinées à être disposées dans des logements prévus respectivement dans le tube 2 et dans l'axe 3.

Selon le mode de réalisation représenté sur les figures 1 à 3, les déformations forment crochets 14 et les logements sont formés d'une fente 15, 16 prévue sur les surfaces extérieures respectivement du tube 2 et de l'axe 3.

Suivant d'autres réalisations non représentées, les extrémités extérieure 12 et intérieure 13 de la lame 7 peuvent être rivetées respectivement sur le tube 2 et sur l'axe 3, ou des moyens spécifiques d'association peuvent être prévus.

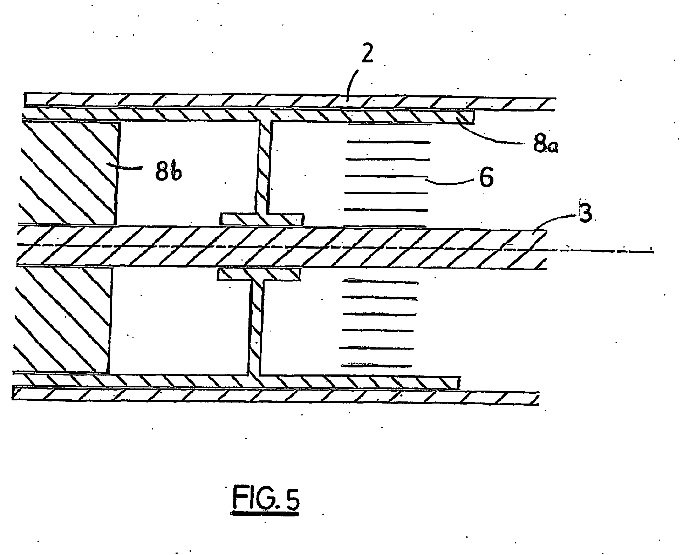

Selon le mode de réalisation représenté sur la figure 5, le palier 8 comprend une partie fixe 8b qui est associée, par exemple par emmanchement, à l'axe 3, et une partie tournante 8a qui est associée, par exemple par emmanchement, à l'intérieur du tube 2.

Dans ce mode de réalisation, l'extrémité extérieure 12 de la lame 7 est associée au tube 2 par l'intermédiaire de la partie tournante 8a, l'extrémité intérieure 13 étant comme dans le premier mode de réalisation associée à l'axe 3.

On décrit ci-dessous, le fonctionnement du rideau 1.

Lors du déroulement de la bande 4, le tube 2 est mis en rotation ce qui provoque une traction du ressort 6 puisque l'extrémité intérieure 13 de la lame 7 est fixe (voir figure 4b). Le ressort 6 emmagasine ainsi de l'énergie par flexion de la lame 7.

Lors de l'enroulement de la bande 4, l'énergie emmagasinée par le ressort 6 est restituée en provoquant la rotation du tube 2 dans le sens de l'enroulement jusqu'à ce que le ressort 6 reprenne sa position de repos (voir figure 4a).

Le rideau 1 selon l'invention présente notamment les avantages suivants :
- la déformation angulaire de la lame 7 est proportionnelle à l'effort appliqué de sorte que l'effort à appliquer pour le déroulement de la bande 4 est sensiblement constant en fonction de la longueur déroulée ;
- le fait d'enrouler la lame 7 permet de diminuer l'encombrement du ressort 6 et donc celui des moyens de rappel du rideau 1 ;
- les ressorts 6 utilisés nécessitent un nombre de tours de précontrainte faible, typiquement égal à deux, ce qui ne limite pas le nombre de tours utilisables qui peut être typiquement égal à neuf ;
- dans le cas de l'utilisation de deux ressorts 6, ceux-ci sont identiques ;
- l'utilisation d'une gaine anti-bruit n'est pas nécessaire car les spires ne frottent pas l'une sur l'autre ;
- le vieillissement du ressort 6 ne modifie sensiblement pas sa capacité de rappel.

## Revendications

1. Rideau enroulable (1) du type comprenant un tube enrouleur (2) monté en rotation autour d'un axe central fixe (3), une bande enroulable (4) autour dudit tube (2) et des moyens de rappel (5) de la bande (4) à l'état enroulé, dans lequel les moyens de rappel (5) comprennent au moins un ressort (6) formé d'une lame enroulée (7), **caractérisé en ce que** ledit ressort (6) est disposé à l'intérieur du tube (2) avec les extrémités extérieure (12) et intérieure (13) de la lame (7) respectivement associées directement au tube (2) et à l'axe (3).

2. Rideau selon la revendication 1, **caractérisé en ce que** deux paliers (8) sont disposés au voisinage des deux extrémités (2a, 2b) du tube 2 pour permettre la rotation dudit tube 2 autour de l'axe 3.

3. Rideau selon la revendication 1 ou 2, **caractérisé en ce que** l'association du ressort (6) respectivement au tube (2) et à l'axe (3) est réalisée par une déformation des extrémités respectivement extérieure (12) et intérieure (13) de la lame (7), lesdites déformations étant destinées à être disposées dans des logements prévus respectivement dans le tube (2) et dans l'axe (3).

4. Rideau selon la revendication 3, **caractérisé en ce que** les déformations forment crochets (14) et **en ce que** les logements sont formés d'une fente (15, 16) prévue sur les surfaces extérieures respectivement du tube (2) et de l'axe (3).

5. Rideau selon la revendication 1 ou 2, **caractérisé en ce que** les paliers (8) sont disposés à l'intérieur du tube (2), et **en ce que** l'extrémité extérieure (12) de la lame (7) est associée au tube (2) par l'intermédiaire de la partie tournante (8a) du palier (8).

6. Rideau selon l'une quelconque des revendications 1 à 5, **caractérisé en ce que** la lame (7) est enroulée en spirale.

7. Rideau selon la revendication 6, **caractérisé en ce que** l'enroulement de la lame (7) du ressort (6) est réalisé de façon irrégulière avec un nombre de spires extérieures (9) plus important que le nombre de spires intermédiaires (10) et/ou intérieures (11).

8. Rideau selon l'une quelconque des revendications 1 à 7, **caractérisé en ce que** la largeur de la bande (4) est sensiblement égale à la longueur du tube (2).

9. Rideau selon l'une quelconque des revendications 1 à 8, **caractérisé en ce que** la bande (4) comprend des moyens de préhension et d'accrochage de la bande (4) déroulée à un support fixe.

10. Rideau selon l'une quelconque des revendications 1 à 9, **caractérisé en ce qu'**il comprend deux ressorts (6) disposés au voisinage des deux extrémités (2a, 2b) du tube (2).

11. Cache bagage comportant un rideau enroulable (1) selon la revendication 10.

12. Store pare-soleil comportant un rideau enroulable (1) selon la revendication 10.

## Claims

1. Roller blind (1) of the type comprising a winding tube (2) mounted in rotation around a fixed central shaft (3), a strip (4) rollable around the said tube (2) and means of retraction (5) of the strip (4) to the rolled state, in which the means of retraction (5) comprise at least one spring (6) consisting of a wound blade (7), **characterised in that** the said spring (6) is positioned inside the tube (2) with the outer end (12) and inner end (13) of the blade (7) directly attached to the tube (2) and the shaft (3) respectively.

2. Blind according to claim 1, **characterised in that** two bearings (8) are positioned in the vicinity of the two ends (2a, 2b) of the tube (2) to allow the rotation of the said tube (2) around the shaft (3).

3. Blind according to claim 1 or 2, **characterised in that** the attachment of the spring (6) to the tube (2) and the shaft (3) respectively is carried out by deformation of the outer end (12) and inner end (13) respectively of the blade (7), the said deformations being designed to be positioned in the housings provided in the tube (2) and in the shaft (3) respectively.

4. Blind according to claim 3, **characterised in that** the deformations form hooks (14) and **in that** the housings consist of a slot (15, 16) provided on the outer surfaces of the tube (2) and the shaft (3) respectively.

5. Blind according to claim 1 or 2, **characterised in that** the bearings (8) are positioned inside the tube (2) and **in that** the outer end (12) of the blade (7) is attached to the tube (2) by way of the rotating part (8a) of the bearing (8).

6. Blind according to any one of claims 1 to 5, **characterised in that** the blade (7) is wound in a spiral.

7. Blind according to claim 6, **characterised in that** the winding of the blade (7) of the spring (6) is made in an irregular way with a number of outer turns (9) greater than the number of intermediate turns (10) and/or inner turns (11).

8. Blind according to any one of claims 1 to 7, **characterised in that** the width of the strip (4) is roughly equal to the length of the tube (2).

9. Blind according to any one of claims 1 to 8, **characterised in that** the strip (4) comprises means of gripping and attachment of the unwound strip (4) to a fixed support.

10. Blind according to any one of claims 1 to 9, **characterised in that** it comprises two springs (6) positioned in the vicinity of the two ends (2a, 2b) of the tube (2).

11. Luggage cover comprising a roller blind (1) according to claim 10.

12. Sun visor comprising a roller blind (1) according to claim 10.

## Patentansprüche

1. Aufrollbarer Vorhang (1) des Typs mit einem drehbar um eine feste Mittelachse (3) montierten Wickelrohr (2), einem um das besagte Rohr (2) aufrollbaren Streifen (4) und Rückstellmitteln (5) für den aufgerollten Streifen (4), wobei die Rückstellmittel (5) mindestens eine aus einem aufgerollten Blatt (7) bestehende Feder (6) umfassen, **dadurch gekennzeichnet, dass** die besagte Feder (6) innerhalb des Rohrs (2) angeordnet ist, wobei das äußere Ende (12) und innere Ende (13) des Blatts (7) jeweils direkt mit dem Rohr (2) und der Achse (3) verbunden sind.

2. Vorhang nach Anspruch 1, **dadurch gekennzeichnet, dass** in der Nähe der beiden Enden (2a, 2b) des Rohrs 2 zwei Lager (8) angeordnet sind, um die Drehung des besagten Rohrs 2 um die Achse 3 zu ermöglichen.

3. Vorhang nach Anspruch 1 oder 2, **dadurch gekennzeichnet, dass** die Verbindung der Feder (6) jeweils mit dem Rohr (2) und der Achse (3) durch eine Verformung des jeweils äußeren Endes (12) und inneren Endes (13) des Blatts (7) erfolgt, wobei die besagten Verformungen dazu bestimmt sind, in jeweils im Rohr (2) und in der Achse (3) vorgesehene Aufnahmen angeordnet zu werden.

4. Vorhang nach Anspruch 3, **dadurch gekennzeichnet, dass** die Verformungen Haken (14) bilden, und dass die Aufnahmen aus einem Schlitz (15, 16) bestehen, der an den Außenflächen jeweils des Rohrs (2) und der Achse (3) vorgesehen ist.

5. Vorhang nach Anspruch 1 oder 2, **dadurch gekennzeichnet, dass** die Lager (8) innerhalb des Rohrs (2) angeordnet sind, und dass das äußere Ende (12) des Blatts (7) über den drehbaren Teil (8a) des Lagers (8) mit dem Rohr (2) verbunden ist.

6. Vorhang nach einem der Ansprüche 1 bis 5, **dadurch gekennzeichnet, dass** das Blatt (7) spiralförmig aufgerollt ist.

7. Vorhang nach Anspruch 6, **dadurch gekennzeichnet, dass** das Aufrollen des Blatts (7) der Feder (6) unxegelmäßig erfolgt., mit einer großeren Anzahl von Außenwindungen (9) als die Anzahl von Zwischenwindungen (10) und/oder Innenwindungen (11).

8. Vorhang nach einem der Ansprüche 1 bis 7, **dadurch gekennzeichnet, dass** die Breite des Streifens (4) wesentlich der Länge des Rohrs (2) entspricht.

9. Vorhang nach einem der Ansprüche 1 bis 8, **dadurch gekennzeichnet, dass** der Streifen (4) Mittel zum Greifen und Einhaken des abgerollten Streifens (4) in einen festen Träger umfasst.

10. Vorhang nach einem der Ansprüche 1 bis 9, **dadurch gekennzeichnet, dass** er zwei Federn (6) umfasst, die in der Nähe der beiden Enden (2a, 2b) des Rohrs (2) angeordnet sind.

11. Gepäckabdeckung mit einem aufrollbaren Vorhang (1) nach Anspruch 10.

12. Sonnenschutz-Store mit einem aufrollbaren Vorhang (1) nach Anspruch 10.
